# EUROPEAN PATENT APPLICATION

(11) **EP 4 647 802 A1**
(43) Date of publication of application: **12.11.2025**
(21) Application number: 24175188.2
(22) Date of filing: 10.05.2024
(51) Int. Cl.: G01S 7/02, G01S 7/03, G01S 13/86, G01S 13/931, H01P 3/12, H01Q 1/32, H01Q 1/42, H01Q 13/06

(54) **SENSOR SYSTEM**

(71) Applicant: Aptiv Technologies AG, 8200 Schaffhausen (CH)
(72) Inventor: Bornemann, Martin, 90489 Nürnberg (DE); Vinci, Gabor, 90763 Fürth (DE); Leonardi, Roberto, 90403 Nürnberg (DE); Talai, Armin, 90431 Nürnberg (DE)
(74) Representative: Lewis Silkin LLP

(57) **Abstract**

A sensor system comprises an optical sensor which includes an imaging device and a detection device which defines a rear side of the optical sensor, a radar transceiver unit for generating radar waves to be transmitted and for receiving radar waves to be detected, and at least one antenna element configured to transfer radar waves from the radar transceiver unit to an exterior of the sensor system and from the exterior of the sensor system to the radar transceiver unit. The radar transceiver unit is located at the rear side of the optical sensor.

## Description

### FIELD

The present disclosure relates to a sensor system which includes an optical sensor, a radar transceiver unit and at least one antenna element.

### BACKGROUND

For monitoring a predefined spatial region, camera systems or ultrasonic sensors are usually applied. For example, a vehicle like a passenger car may be equipped with a certain number of ultrasonic sensors and/or camera systems in order to provide a parking distance control, i.e. for supporting a driver when parking the vehicle or for automatic parking. However, ultrasonic systems are expensive, and a big number of ultrasonic sensors and camera systems may be required e.g. at a vehicle for covering the desired spatial region.

On the other hand, the use of radar systems has also been considered for parking applications. For vehicles, however, the radar systems are mostly restricted to traditional installation locations. For example, a bumper may be provided with corner radar systems, front radar systems may be provided in a front grill and/or in or below the bumper, and side radar systems may be installed at a B-pillar. Therefore, a combination of radar systems with other types of sensors, like a camera system, is usually not considered in vehicles due to their different installation requirements.

Accordingly, there is a need to have a sensor system which requires little installation space and at the same time allows for a reliable surveillance of a spatial region.

### SUMMARY

The present disclosure provides a sensor system according to the independent claim. Embodiments are given in the subclaims, the description and the drawings.

In one aspect, the present disclosure is directed at a sensor system comprising an optical sensor which includes an imaging device and a detection device which defines a rear side of the optical sensor, a radar transceiver unit for generating radar waves to be transmitted and for receiving radar waves to be detected, and at least one antenna element configured to transfer radar waves from the radar transceiver unit to an exterior of the sensor system and from the exterior of the sensor system to the radar transceiver unit. The radar transceiver unit is located at the rear side of the optical sensor.

The optical sensor may be configured to detect light in the visible range and the infrared range of the electromagnetic spectrum. The imaging device of the optical sensor may include an objective, i.e. one or more object lenses, which may be able to provide an image or a sequence of images related to an external environment of the sensor system at the detection device of the optical sensor. By this means, one or more objects can be monitored in the external environment.

The detection device may include semiconducting detection units like chip of a charge coupled device (CCD) comprising a predefined number of pixels. Therefore, the detection device may be able to convert the detected light into electric signals which may be output by the sensor system and which may provide an image of the external environment of the sensor system for one or more points in time.

The radar transceiver unit may be able to generate radar waves in a frequency range of about 78 GHz, i.e. in a usable radar frequency band from 76 to 81 GHz. As an alternative, a frequency range above 100 GHz may also be applied by the radar transceiver unit. Conversely, the radar transceiver unit may also be configured to receive the radar waves having frequencies in such frequency ranges, i.e. in a predefined range at approximately 78 GHz or above 100 GHz. The radar transceiver unit and the at least one antenna element are therefore part of a radar system which is also configured to monitor one or more objects in the external environment of the sensor system.

Since the sensor system comprises an optical sensor and the radar system with the radar transceiver unit and the at least one antenna element, the optical sensor and the radar system may supplement each other when monitoring the external environment of the sensor system. For example, the radar system may be able to detect objects in the dark, i.e. at night, when the intensity of light may be too low for the optical sensor to monitor objects reliably. In addition, the instrumental field of view of the optical sensor and the radar system may be different. For example, the radar system may have a wide field of view with respect to an elevation and an azimuth direction which may cover approximately 150 degrees in the respective direction.

Since the radar transceiver unit is located at the rear side of the optical sensor, the lateral extension of the sensor system is restricted. For example, the dimensions of the sensor system may be almost the same as for a known purely optical sensor or small camera since the radar system, i.e. the radar transceiver unit and the associated antenna elements, may be installed in a narrow space around the optical sensor. In addition, the at least one antenna element may include one or more antennas which are in communication with the radar transceiver unit. The antennas may transmit and to receive radar waves in a flexible manner at different locations of an outer surface of the sensor system.

An outer surface of the imaging device may define a front side of the optical sensor and the entire sensor system, and an opposite boundary of the detection device may define a region at the rear side of the optical sensor in which the radar transceiver unit is located. Therefore, the sensor system may be provided with a small footprint which may allow a flexible installation of the sensor system e.g. at different locations on a vehicle like a passenger car. Moreover, the sensor system may also be suitable for the surveillance of closed rooms, e.g. in buildings. Due to the radar system, no external light source may be required for the operation of the sensor system when performing such a surveillance task.

According to an embodiment, the sensor system may further comprise a common housing which encloses the optical sensor, the radar transceiver unit and the at least one antenna element. The common housing may enclose the components of the sensor system except for openings provided for the imaging device, e.g. for a front lens, and one or more openings for the at least one antenna element such that the sensor system is able to interact with its external environment, i.e. by transmitting radar waves into the external environment and by receiving light and radar waves from the external environment of the sensor system.

For example, the common housing may be a specific housing provided for the optical sensor only at first, and the radar system, i.e. the radar transceiver unit and the at least one antenna element, may be incorporated in a second installation step such that the radar transceiver unit is installed in a small space behind or at the rear side of the detection device and the one or more antenna elements may extend through the specific housing of the optical sensor.

Due to the common housing enclosing all components of the sensor system, the sensor system may be a compact unit which may allow for a flexible installation e.g. at different locations on a vehicle. Hence, such a sensor system may be a cost effective and flexible solution for the task of monitoring a special region within the external environment of the sensor system, e.g. when being installed on a vehicle or within a closed room of a building.

An outer surface of the imaging device may define a front side of the sensor system. The at least one antenna element may be configured to transfer radar waves from the radar transceiver unit to the front side of the sensor system. In other words, the optical sensor and the radar system comprising the radar transceiver unit and the one or more antenna element may look into the same direction starting from the front side of the sensor system. Hence, redundant and/or supplementary information may be provided by the optical sensor and the radar transceiver unit such that the reliability of the sensor system may be improved.

The at least one antenna element may extend in parallel with an optical axis of the optical sensor. In other words, one or more antenna elements may be aligned in parallel with the optical sensor. This may facilitate the installation of one or more antenna elements.

The at least one antenna element may include at least one air wave guide antenna. One or more air wave guide antennas may provide a wide field of view of e.g. +/- 75° with respect to an elevation direction and an azimuth direction relative to the optical axis of the optical sensor. The one or more air wave guide antennas may be open air wave guide antennas providing a very good transmission for radar waves. However, the open airwave guides antennas may be covered, e.g. by a closure or a radome, in order to protect to the interior of the sensor system from external disturbances like moisture, dust etc.

The at least one antenna element may include a set of transmission elements and a set of receiving elements. Each set, i.e. the set of transmission elements and the set of receiving elements, may be arranged in separate spatial regions within the sensor system. For example, the respective transmission elements and the respective receiving elements of each set may be arranged as a respective group of adjacent elements having a predefined phase relationship with respect to each other. Moreover, the respective sets may be arranged close to and around the imaging device of the optical sensor such that a compact arrangement may be achieved. For example, the transmission elements and the receiving elements may end at openings at the front side of the optical sensor and the entire sensor system.

For example, the radar system of the sensor system may include four transmission elements and four receiving elements, and these may be horizontally and vertically distributed. In such a configuration, phase differences may be determined between the antenna elements in order to measure an azimuth angle and an elevation angle of an object. By four transmission elements and four receiving elements, the accuracy may be improved when determining an angle of an object e.g. with respect to longitudinal direction of the vehicle in which the sensor system may be installed. On the other hand, restrictions regarding the available installation space may be fulfilled by providing not more than four transmission elements and four receiving elements.

The set of transmission elements and the set of receiving elements may be aligned along a respective predefined direction. For example, the predefined directions may each be arranged linearly along a respective line. This may facilitate the installation of the transmission elements and the receiving elements and their predefined relationship with respect to the phase. For example, the two lines may be angled with respect to each other. This may support a compact arrangement of the antenna elements with respect to the imaging device of the optical sensor.

According to a further embodiment, the sensor system may further include a first printed circuit board (PCB) and a feed device for the at least one antenna element. The radar transceiver unit and the feed device may be arranged at the same side of the first printed circuit board. The feed device may be configured to provide a radio communication between the radar transceiver unit and the at least one antenna element for the radar waves to be transmitted and to be received. By arranging the radar transceiver unit and the feed device on the same side of the first printed circuit board, a spatial relationship is defined between the radar transceiver unit and the feed device, and their installation is facilitated due to the connection to the first printed circuit board.

Moreover, the sensor system may further include a second printed circuit board associated with the detection device of the optical sensor. The radar transceiver unit and the feed device may be arranged at a side of the first printed circuit board facing the second printed circuit board. For example, the detection device of the optical sensor may be arranged on top of the second printed circuit board, i.e. at a side facing the imaging device. Since the radar transceiver unit and the feed device may be arranged in such a manner that they face the second printed circuit board, a compact arrangement can be achieved for the entire radar system including the radar transceiver unit, the feed device and the at least one antenna element. That is, no further elements like plated holes in the printed circuit boards may be required.

Alternatively, the radar transceiver unit and the feed device may be arranged at a side of the first printed circuit board being averted from the second printed circuit board. In other words, the detection device of the optical sensor and the radar transceiver unit together with the feed device may be arranged on opposite sides of their respective printed circuit boards. Therefore, disturbances may be decreased or avoided between the electronic elements of the optical sensor and the radar system. In addition, the radar transceiver unit and the feed device may have a good accessibility when being arranged at the side being averted from the second printed circuit board and the optical sensor, i.e. in comparison to being arranged on an inner side facing the second printed circuit board and the optical sensor. However, plated holes may be required in the first printed circuit board for connecting the one or more feed devices to the one or more antenna elements.

According to another embodiment, the detection device of the optical sensor may be arranged at a first side of the first printed circuit board, and the radar transceiver unit and the feed device may be arranged at a second side of the first printed circuit board being opposite to the first side. In other words, the detection device and the radar transceiver unit together with the feed device may be arranged on opposite sides of the same printed circuit board such that the sensor system may include one printed circuit board only for the detection device of the optical sensor and for the radar system, i.e. for the radar transceiver unit and the feed device. For this embodiment, the compactness of the sensor system may further be enhanced. In addition, the first printed circuit board as common printed circuit board may facilitate the acquisition and the unification of output signals and output data provided by the optical sensor and the radar transceiver unit.

The first and second printed circuit boards may comprise a processing unit, at least one memory unit and at least one non-transitory data storage. The non-transitory data storage and/or the memory unit may comprise a computer program for instructing the computer to perform several or all steps or aspects for processing data provided by the optical sensor and the radar transceiver unit described herein.

The non-transitory data storage and/or the memory unit may further include a computer readable medium which may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

According to a further embodiment, the imaging device may include at least one lens. That is, the optical sensor may be configured as a camera system in which one or more objective lenses may generate an image of the external environment of the sensor system at the detection device.

According to a further embodiment, the imaging device may be surrounded by an enclosure consisting of a solid material. The enclosure may include at least one slot forming the at least one antenna element. In other words, one or more slot antennas are formed by the enclosure which may be a part of the housing of the optical sensor. By this means, a compact and reliable arrangement of one or more antennas surrounding the optical sensor may be achieved.

Moreover, an end of the at least one antenna element may be covered by a radome or a closure having a high transmittivity for radar waves. For example, the ends of one or more antenna elements may be arranged at a front side of the sensor system which may be defined by an outer surface of the imaging device of the optical sensor. For such an arrangement, the respective ends of one or more antenna elements may provide a connection of the respective antenna element to the exterior of the sensor system. Via the radome or one or more closures, the respective end of the one or more antenna elements may be protected against the influence from the external environment of the sensor system, e.g. against moisture or dust.

### DRAWINGS

Exemplary embodiments and functions of the present disclosure are described herein in conjunction with the following drawings, showing schematically:
- Fig. 1: a front view of a sensor system according to the disclosure;
- Fig. 2: cross-sectional views of a first embodiment of the sensor system;
- Fig. 3: cross-sectional views of a second embodiment of the sensor system;
- Fig. 4: cross-sectional views of a third embodiment of the sensor system; and
- Fig. 5: an exploded perspective view of a fourth embodiment of the sensor system.

### DETAILED DESCRIPTION

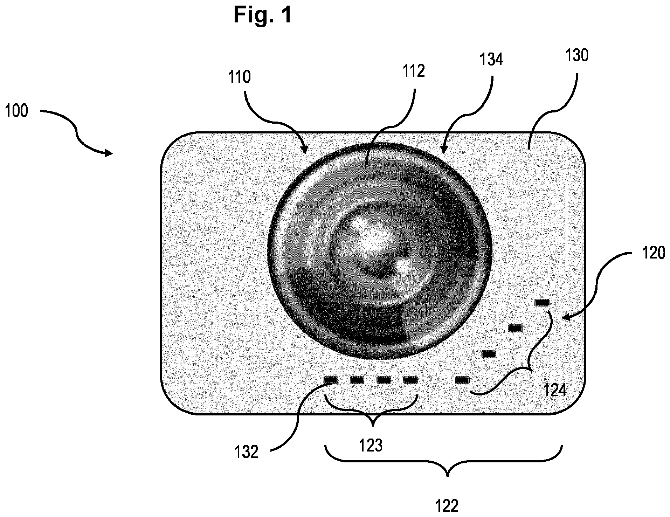

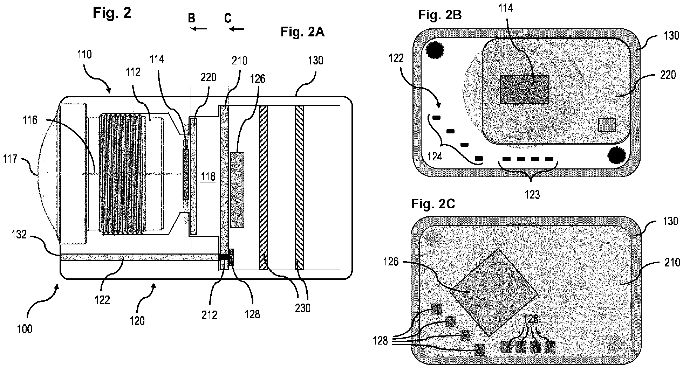

Fig. 1 schematically depicts a front view of a sensor system 100 which includes an optical sensor 110 and a radar system 120. The optical sensor 110 is configured as camera and includes an imaging device 112 configured as a camera lens assembly which includes objective lenses. The radar system 120 includes a plurality of antenna elements 122. For the first, second and third embodiments (see also Figs. 2 to 4), the antenna elements 122 include four transmission or Tx antennas 123 and four receiving or Rx antennas 124.

The sensor system 100 includes a common housing 130 which encloses the optical sensor 110 and the radar system 120. The housing 130 includes narrow openings or slots 132, in which of which a respective end portion of the antenna elements 122 is arranged. Moreover, the housing 130 includes a large opening 134 for a first lens of the imaging device 112 of the optical sensor 110.

The front view of the sensor system 100 as shown in Fig. 1 is valid for the first, second and third embodiments of the sensor system 100 as shown in Figs. 2, 3 and 4, respectively. In other words, the sensor system 100 is provided with the same front view as shown in Fig. 1 regardless of the specific configuration of its interior as shown in Figs. 2, 3 and 4.

Fig. 2A schematically depicts a cross-sectional side view of the sensor system 100 according to a first embodiment. In addition to the imaging device or camera lens assembly 112, the optical sensor 110 includes a detection device or camera chip 114. That is, the imaging device or camera lens assembly 112 is configured to provide an image of the exterior of the sensor system 100 at a surface of the detection device 114. The detection device 114 includes a plurality of pixels, for example, and is configured as a semiconductor device like a charge coupled device (CCD) for transforming the light entering the detection device 114 into electrical signals.

In Fig. 2A, a center line of the optical sensor 110 is depicted which also constitutes an optical axis 116 for the imaging within the optical sensor 110. The imaging device 112 has an outer surface 117, i.e. as an outer surface of the first lens of the imaging device 112, which defines a front side of the optical sensor 110 and of the entire sensor system 100.

One of the antenna elements 122 of the radar system 120 is shown in Fig. 2. The antenna element 122 extends between the opening 132 within the housing 130 of the sensor system 100 and a first printed circuit board (PCB) 210. Since the first printed circuit board 210 is associated with the radar system 120, the first printed circuit board 210 is also denoted as radar PCB 210. At the radar PCB 210, a radar transceiver unit 126 is arranged which is configured to generate radar waves to be transmitted and to receive radar waves to be detected by the sensor system 100. At the radar PCB 210, a feed device or feeder system 128 is also arranged which is configured to couple the radar transceiver unit 126 with one of the antennas 122. That is, respective feed devices 128 provide a radio communication between the radar transceiver unit 126 and the antenna elements 122. In order to do so, the first printed circuit board or antenna PCB 210 is provided with a respective plated hole 212 associated which each of the antenna elements 122.

The antenna elements 122 extend in parallel with the optical axis 116 of the optical sensor 110 and are each configured as open air wave guide antennas. Such an open air wave guide antenna transmits and receives radar waves having frequencies in a range of about 78 GHz and above. The configuration as open air wave guide antennas provides the antenna elements 122 with a wide instrumental field of view of about +/- 75° in the elevation direction and in the azimuth direction.

When the sensor system 100 is operating, the antenna elements 122 transfer radar waves from the radar transceiver unit 126 to an exterior of the sensor system 100 and from the exterior of the sensor system 100 to the radar transceiver unit 126. In detail, the antenna elements 122 transfer the radar waves from the radar transceiver unit 126 to the front side of the sensor system which is defined by the outer surface 117 of the optical sensor 110.

Furthermore, a rear side 118 of the optical sensor 110 is defined by the detection device 114 of the optical sensor 110. That is, the detection device 114 of the optical sensor 110 is mounted at a second printed circuit board 220 which may also be denoted as camera PCB 220. The backside of the detection device 114 and of the second printed circuit board 220 defines the rear side 118 of the optical sensor 110. The radar transceiver unit 126 which is arranged at the first printed circuit board or radar PCB 210 is therefore located at the rear side 118 of the optical sensor 110. That is, the first printed circuit board or radar PCB 210 which carries the radar transceiver unit 126 and the feed device 128 is located behind or at the rear side 118 of the second printed circuit board or camera PCB 220 which carries the detection device 114 of the optical sensor 110.

Fig. 2B depicts a cross section at a plane denoted by "B" in Fig. 2A, i.e. when looking from the rear side 118 at the second printed circuit board 220 as indicated by the small arrow. In Fig. 2B, the detection device 114 mounted at a second printed circuit board 220 is depicted although the detection device 114 is actually arranged on the opposite side of the second printed circuit board 220, as can be seen in Fig. 2A. Moreover, the antenna elements 122 are schematically shown which include the transmission or Tx antennas 123 and the receiving or Rx antennas 124.

In Fig. 2C, a corresponding cross section is shown at a plane which is denoted by "C" in Fig. 2A. That is, Fig. 2C shows a cross-section at the first printed circuit board or radar PCB 210. Fig. 2C illustrates how the radar transceiver unit 126 and the feed devices 128 for each of the antenna elements 122 are arranged or mounted on top of the first printed circuit board or radar PCB 210. The radar transceiver unit 126 and the feed devices 128 are arranged at a side of the first printed circuit board 210 which is averted or facing away from the rear side 118 of the optical sensor 110 and from the second printed circuit board 220 (see also Fig. 2A). The detection device 114 and the radar transceiver unit 126 are therefore oriented in opposite directions with respect to the respective printed circuit boards 210, 220 at which they are arranged.

Due to the arrangement of the radar transceiver unit 126 at the rear side 118 of the optical sensor 110 and due to the arrangement of the antenna elements 122 in parallel with the optical axis 116 of the optical sensor 110 and their configuration as open air antenna wave guides, the sensor system 110 has a small footprint and requires a small space only for installation, e.g. at the vehicle like a passenger car or in a closed room in a building. Due to such low spatial requirements for installation, a flexible installation is possible for the combined optical and radar sensor system 100, e.g. at locations which are not available for known sensor systems.

The first and second printed circuit boards 210, 220 are further provided with connections and/or communication devices like cables etc. (not shown) in order to provide output signals of the detection device 114 of the optical sensor 110 and of the radar system 120 for further processing. In order to process the output signals of the detection device 114 and of the radar system 120, i.e. the signals provided by the radar transceiver unit 126, the sensor system 100 further includes additional printed circuit boards 230. In Fig. 2A, two additional printed circuit boards 230 are shown although the sensor system 100 may also include one of these additional printed circuit boards 230 or more than two additional printed circuit boards 230. The additional printed circuit boards 230 may be configured to acquire the signals of the detection device 114 of the optical sensor 110 via the second printed circuit board 220 and the signals provided by the radar transceiver unit 126 via the first printed circuit board 210. Moreover, the additional printed circuit boards 230 may be configured to process these signals in order to provide output signals or output data of the entire sensor system 100.

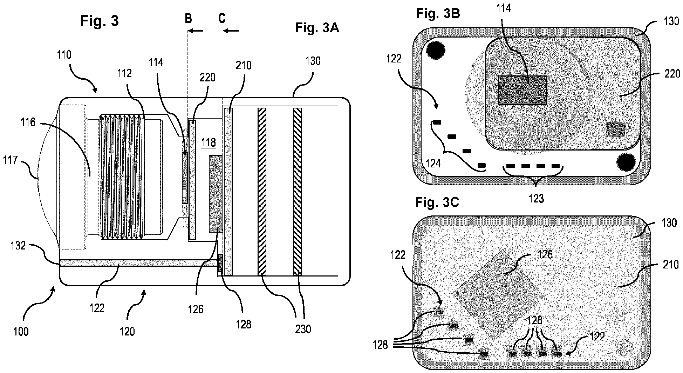

Fig. 3 schematically depicts a second embodiment of the sensor system 100 which generally includes the same components as the first embodiment. That is, the description as provided above with respect to Figs. 1 and 2 is also valid for the second embodiment as shown in Fig. 3 except for the differences which will be described in the following.

A cross-sectional side view of the second embodiment of the sensor system 100 is shown in Fig. 3A. The second embodiment differs from the first embodiment as shown in Fig. 2 in that the radar transceiver unit 126 and the feed device 128 are arranged at the opposite side of the first printed circuit board or radar PCB 210. Therefore, the radar transceiver unit 126 and the feed device 128 are arranged at a side of the first printed circuit board 210 which faces the second printed circuit board 220 and the rear side 118 of the optical sensor 110. Due to this arrangement, the first printed circuit board 210 is free of the plated holes 212 (see Fig. 2) which are required as the feed-through for the radar waves in the first embodiment, i.e. for providing a connection between the feed devices 128 and the antenna elements 122. Therefore, the second embodiment of the sensor system 100 as shown in Fig. 3 has an even more compact arrangement than the first embodiment as shown in Fig. 2.

Fig. 3B schematically depicts a cross section at a plane denoted by "B" in Fig. 3A. The cross section of Fig. 3B includes the same components and arrangements as the cross section shown in Fig. 2B for the first embodiment. Hence, the description of Fig. 2B is also valid for Fig. 3B.

Fig. 3C schematically depicts a cross section at a plane denoted by "C" in Fig. 3A, i.e. in a similar manner as the cross section shown in Fig. 2C for the first embodiment of the sensor system 100. However, the plane C is slightly shifted along the optical axis 116 in a direction to the optical sensor 110, i.e. to the opposite side of the first printed circuit board 210 with respect to Fig. 2A. Therefore, the first printed circuit board 210 is assumed to be transparent for illustration reasons in Fig. 3C. The radar transceiver unit 126 and the feed devices 128 are arranged directly on top of the first printed circuit board 210, as can be recognized in Fig. 3A. In addition, the respective ends of the antenna elements 122 are also depicted in Fig. 3C since these ends are directly connected to the respective feed devices 128.

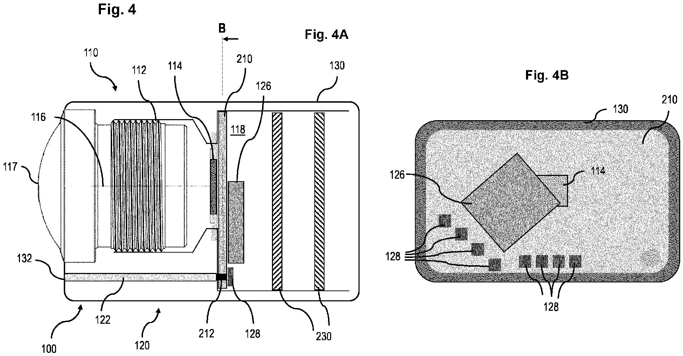

Fig. 4 depicts a third embodiment of the sensor system 100 which includes almost the same components as the first embodiment as shown in Fig. 2. Therefore, the description provided above with respect to Figs. 1 and 2 is also valid for the third embodiment as shown in Fig. 4, except for the difference which will be described in the following.

The third embodiment for which a cross sectional side view is shown in Fig. 4A differs from the first embodiment as shown in Fig. 2 in that only one printed circuit board, i.e. the first printed circuit board 210, is provided for carrying the detection device 114, the radar transceiver unit 126 and the feed devices 128. That is, detection device 114 of the optical sensor 110 is arranged on one side of the PCB 210, and the radar transceiver unit 126 together with the feed devices 128 are arrange on the opposite side of the PCB 210. Due to this arrangement, plated holes 212 are also required for the third embodiment of the sensor system 100, i.e. as a feed-through for the radar waves transmitted to and received from the antenna elements 122, i.e. in the same manner as for the first embodiment as shown in Fig. 2. By arranging the detection device 114 and the radar transceiver unit 126 together with the feed devices 128 on different sides of the same printed circuit board 210, an even more compact arrangement can be achieved for the sensor system 100, i.e. in comparison to the first and second embodiments.

Fig. 4B depicts a cross section at a plane denoted by "B" in Fig. 4A, i.e. when viewed from the rear side 118 of the optical sensor 110. For illustration reasons, the first printed circuit board 210 is depicted as being transparent in Fig. 4B. Therefore, Fig. 4B shows the arrangement of the radar transceiver unit 126 at an upper side of the first printed circuit board 210 with respect to the arrangement of the detection device 114 of the optical sensor 110 at the opposite side of the printed circuit board 210. In addition, the feed devices 128 for the radar elements 122 are depicted in Fig. 4B which are arranged on the upper side of the printed circuit board 210, i.e. on the same side as the radar transceiver unit 126.

As can be recognized in Figs. 1 to 3, the transmission antennas 123 and the receiving antennas 124 are arranged in separate spatial regions within the sensor system 100. That is, the transmission antennas 123 and the receiving antennas 124 form different sets of the antenna elements 122 which are spatially separated from each other. The set of transmission elements 123 and the set of receiving elements 124 are further aligned along a respective predefined direction, i.e. arranged linearly along a respective line. These two lines for the alignment of the transmission elements 123 and the receiving elements 124 are angled with respect to each other. Therefore, a predefined phase relationship can be provided for the antenna elements 122 with in each group or set of transmission elements 123 and receiving elements 124.

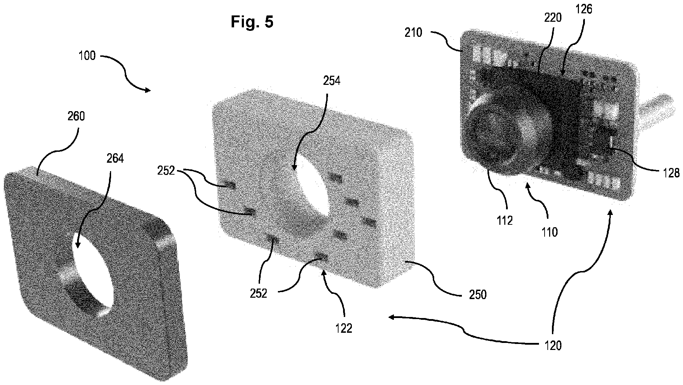

Fig. 5 depicts an exploded perspective view of a fourth embodiment of the sensor system 100. The fourth embodiment as shown in Fig. 5 is similar to the second embodiment as shown in Fig. 3 such that the description of Fig. 3 is generally also valid for Fig. 5 except for the differences as described in the following.

On the right side of Fig. 5, the imaging device 112 of the optical sensor 110 is shown together with the second printed circuit board or camera PCB 220 which is mounted on top of the first printed circuit board or radar PCB 210. Components of the radar system 120 like the radar transceiver unit 126 (hidden by the second printed circuit board 220) and the feed devices 128 are arranged at a side of the first printed circuit board 210 facing the second printed circuit board 220 and the optical sensor 110.

The fourth embodiment as shown in Fig. 5 differs from the second embodiment as shown in Fig. 3 in that the sensor system 100 is provided with an enclosure 250 which is shown in the middle of Fig. 5. In an assembled state of the sensor system 100, the imaging device 112 is surrounded by the enclosure 250 which consists of a solid material, i.e. a metal or metallized plastic, for example. The enclosure 250 includes different slots 252 which extend through the enclosure 250 in a direction parallel with the optical axis 116 (see Figs. 2 to 4) of the optical sensor 110. Therefore, the slots 252 within the enclosure 250 form the antenna elements 122 of the radar system 120. In the fourth embodiment of the sensor system 100, the slots 252 also act as open air wave guides antennas as shown for the first, second and third embodiment in Figs. 2, 3 and 4 and as described above.

Furthermore, a radome 260 as shown on the left side of Fig. 5 covers a front side of the enclosure 250 in order to protect the slots 252 with respect to influences from the environment of the sensor system 100. In addition, the radome 260 allows for a tuning of the radar antenna elements 122 via its dielectric property.

The enclosure 250 and the radome 260 are provided with a respective central opening 254, 264 in which the imaging device 112 of the optical sensor 110 is inserted when assembling the sensor system 100. Moreover, the sensor system 100 according to the fourth embodiment as shown in Fig. 5 also includes a housing similar to the housing 130 as shown in Figs. 1 to 4. For illustration reasons, however, the housing of the sensor system 100 has been omitted in Fig. 5 for the fourth embodiment.

According to the disclosure, a sensor system may comprise an optical sensor which may include an imaging device and a detection device which may define a rear side of the optical sensor, a radar transceiver unit for generating radar waves to be transmitted and for receiving radar waves to be detected, and at least one antenna element configured to transfer radar waves from the radar transceiver unit to an exterior of the sensor system and from the exterior of the sensor system to the radar transceiver unit. The radar transceiver unit may be located at the rear side of the optical sensor.

According to various embodiments, the sensor system may further comprise a common housing which encloses the optical sensor, the radar transceiver unit and the at least one antenna element.

According to various embodiments, an outer surface of the imaging device may define a front side of the sensor system, and the at least one antenna element may be configured to transfer radar waves from the radar transceiver unit to the front side of the sensor system.

According to various embodiments, the at least one antenna element may extend in parallel with an optical axis of the optical sensor.

According to various embodiments, the at least one antenna element may include at least one airwave guide antenna.

According to various embodiments, the at least one antenna element may include a set of transmission elements and a set of receiving elements, and each set may be arranged in separate spatial regions within the sensor system.

According to various embodiments, the set of transmission elements and the set of receiving elements may be aligned along a respective predefined direction.

According to various embodiments, the predefined directions may each be arranged linearly along a respective line, and the two lines may be angled with respect to each other.

According to various embodiments, the sensor system may further include a first printed circuit board and a feed device for the at least one antenna element, and the radar transceiver unit and the feed device may be arranged at the same side of the first printed circuit board.

According to various embodiments, the sensor system may further include a second printed circuit board associated with the detection device of the optical sensor, and the radar transceiver unit and the feed device may be arranged at a side of the first printed circuit board facing the second printed circuit board.

According to various embodiments, the sensor system may further include a second printed circuit board associated with the detection device of the optical sensor, and the radar transceiver unit and the feed device may be arranged at a side of the first printed circuit board being averted from the second printed circuit board.

According to various embodiments, the detection device of the optical sensor may be arranged at a first side of the first printed circuit board, and the radar transceiver unit and the feed device may be arranged at a second side of the first printed circuit board being opposite to the first side.

According to various embodiments, the imaging device may include at least one lens.

According to various embodiments, the imaging device may be surrounded by an enclosure consisting of a solid material, and the enclosure may include at least one slot forming the at least one antenna element.

According to various embodiments, an end of the at least one antenna element may be covered by a radome or a closure having a high transmittivity for radar waves.

### Reference numeral list

- 100: sensor system
- 110: optical sensor
- 112: imaging device, camera lens assembly
- 114: detection device
- 116: optical axis
- 117: outer surface of the imaging device
- 118: rear side of the optical sensor
- 120: radar system
- 122: antenna element
- 123: transmission antenna
- 124: receiving antenna
- 126: radar transceiver unit
- 128: feed device
- 130: housing
- 132: narrow opening
- 134: large opening
- 210: first printed circuit board or radar PCB
- 212: plated hole
- 220: second printed circuit board or camera PCB
- 230: additional printed circuit board
- 250: enclosure
- 252: slot
- 254: central opening of the enclosure
- 260: radome
- 264: central opening of the radome

## Claims

1. Sensor system (100), comprising:
an optical sensor (110) which includes an imaging device (112) and a detection device (114) which defines a rear side (118) of the optical sensor (110),
a radar transceiver unit (126) for generating radar waves to be transmitted and for receiving radar waves to be detected, and
at least one antenna element (122) configured to transfer radar waves from the radar transceiver unit (126) to an exterior of the sensor system (100) and from the exterior of the sensor system (100) to the radar transceiver unit (126),
wherein the radar transceiver unit (126) is located at the rear side (118) of the optical sensor (110).

2. Sensor system (100) according to claim 1, wherein
the sensor system (100) further comprises a common housing (130) which encloses the optical sensor (110), the radar transceiver unit (126) und the at least one antenna element (122).

3. Sensor system (100) according to claim 1 or 2, wherein
an outer surface (117) of the imaging device (112) defines a front side of the sensor system (100) and
the at least one antenna element (122) is configured to transfer radar waves from the radar transceiver unit (126) to the front side of the sensor system (100).

4. Sensor system (100) according to any one of claims 1 to 3, wherein
the at least one antenna element (122) extends in parallel with an optical axis (116) of the optical sensor (110).

5. Sensor system (100) according to any one of claims 1 to 4, wherein
the at least one antenna element (122) includes at least one air waveguide antenna.

6. Sensor system (100) according to any one of claims 1 to 5, wherein
the at least one antenna element (122) includes a set of transmission elements (123) and a set of receiving elements (124), each set being arranged in separate spatial regions within the sensor system (100).

7. Sensor system (100) according to claim 6, wherein
set of transmission elements (123) and set of receiving elements (124) are aligned along a respective predefined direction.

8. Sensor system (100) according to claim 7, wherein
the predefined directions are each arranged linearly along a respective line,
the two lines are angled with respect to each other.

9. Sensor system (100) according to any one of claims 1 to 8, wherein
the sensor system (100) further includes a first printed circuit board (210) and a feed device (128) for the at least one antenna element (122), and
the radar transceiver unit (126) and the feed device (128) are arranged at the same side of the first printed circuit board (210).

10. Sensor system (100) according to claim 9, wherein
the sensor system (100) further includes a second printed circuit board (220) associated with the detection device (114) of the optical sensor (110), and
the radar transceiver unit (126) and the feed device (128) are arranged at a side of the first printed circuit board (210) facing the second printed circuit board (220).

11. Sensor system (100) according to claim 9, wherein
the sensor system (100) further includes a second printed circuit board (220) associated with the detection device (114) of the optical sensor (110), and
the radar transceiver unit (126) and the feed device (128) are arranged at a side of the first printed circuit (210) board being averted from the second printed circuit board (220).

12. Sensor system (100) according to claim 9, wherein
the detection device (114) of the optical sensor (110) is arranged at a first side of the first printed circuit board (210), and
the radar transceiver unit (126) and the feed device (128) are arranged at a second side of the first printed circuit board (210) being opposite to the first side.

13. Sensor system (100) according to any one of claims 1 to 12, wherein
the imaging device (112) includes at least one lens.

14. Sensor system (100) according to any one of claims 1 to 13, wherein
the imaging device (112) is surrounded by an enclosure (250) consisting of a solid material, and
the enclosure (250) includes at least one slot (252) forming the at least one antenna element (122).

15. Sensor system (100) according to any one of claims 1 to 14, wherein
an end of the at least one antenna element (122) is covered by a radome (260) or a closure having a high transmittivity for radar waves.
